# EUROPEAN PATENT APPLICATION

(11) **EP 1 473 524 A2**
(43) Date of publication of application: **03.11.2004**
(21) Application number: 04018822.9
(22) Date of filing: 05.09.2000
(51) Int. Cl.: F24F 11/02, F24F 11/00

(54) **Ventilation system**

(30) Priority: 07.09.1999 JP 25238399
(62) Divisional of application: 00119189.9
(71) Applicant: Matsushita Electric Industrial Co., Ltd., Kadoma-shi, Osaka 571-8501 (JP)
(72) Inventor: Kawabe, Yoshikazu, Nagahama-shi Shiga 526-0051 (JP); Watanabe, Yukio, Higashikujyo, Minami-ku Kyoto-shi Kyoto (JP); Fujitaka, Akira, Otsu-shi Shiga 520-2144 (JP); Kayano, Satoshi, Ritto-cho Kurita-gun Shiga 520-3031 (JP); Yakumaru, Yuichi, Kusatsu-shi Shiga 525-0055 (JP); Kobayashi, Yoshinori, Shiga 524-0021 (JP); Murozono, Koji, Kusatsu-shi Shiga 525-0045 (JP)
(74) Representative: Körfer, Thomas, Dipl.-Phys.

(57) **Abstract**

This invention relates to a ventilation system which assures a superior safety by suppressing a localized stagnation of a flammable gas and a concentration increase thereof in case a leakage of a flammable gas or refrigerant is detected. The ventilation system is comprised of a detector which detects a flammable gas or refrigerant, a ventilating fan which ventilates a room, a ceiling fan and an air conditioner indoor unit which stir the air of the room, en electric power supply switch which turns off a power supply to a fan heater or an electric stove. With this configuration, in the room, a localized stagnation of the gas can be avoided and a source of fire can be eliminated; thereby, a superior safety can be realized.

## Description

### Background of the Invention

### (1) Field of the Invention

The present invention relates to a ventilation system which carries out a ventilation upon detection of a flammable gas.

### (2) Description of the Prior Art

Conventionally, to secure safety in case of a gas leakage, either of the followings is commonly adopted upon the detection of the gas leakage: issuing a warning; shutting off the gas at the source; and operating a ventilating fan according to a sensor.

However, the above conventional ways such as shutting off the gas at the source and operating a ventilating fan have such a problem that it will take time to eliminate the danger in a possible situation where a localized flammable region might have been developed as of the time when the flammable gas is detected.

In particular, a gas which is heavier than the air, such as propane etc. tends to stay the lower part of a room. Therefore, it will take time to exhaust the gas by a ventilating fan which is normally installed at the upper part of a room. Accordingly, during such ventilation, if there is a spark at an electric power supply switch, or a fire of a stove or a burner, a fire may be caught.

Thereupon, it is an object of the present invention to provide a ventilation system which realizes a superior safety; in particular, the ventilation system which stirs the air of a room by a fan means in addition to carrying out the ventilation of the room by a ventilation means upon detection of a flammable gas or leakage of a refrigerant, thereby eliminating a localized stagnation of or an increase of concentration of the flammable gas.

### Disclosure of the Invention

To achieve the above object and other objects, according to the present invention, as the first mode of the invention, there is provided a ventilation system which is comprised of: a detecting means which detects a flammable gas; a ventilating means; and a fan means which stirs the air of a room when said detecting means detects said flammable gas; wherein, said detecting means, said ventilating means and said fan means are connected via a communication means and when said detecting means detects said flammable gas, in addition to carrying out a ventilation of the room by said ventilating means, stirring of the air of the room is carried out by said fan means. By this mode of the invention, a generation of a localized flammable region can be suppressed and speed of ventilation can be accelerated; thereby it can provide a superior safety.

Further, according to the present invention, there is provided, as the second mode, a ventilation system which is comprised of: an air conditioner using a flammable refrigerant; a detecting means which detects a flammable gas; and a ventilating means; wherein, said detecting means, said ventilating means and said air conditioner are connected via a communication means and when said detecting means detects said flammable gas, in addition to carrying out a ventilation of the room by said ventilating means, confirmation of the fact that there is no leakage of said flammable refrigerant from said air conditioner is made, or after a flow of said flammable refrigerant into pipes of indoor side is prevented, stirring of the air of the room is carried out by ventilation operation of said air conditioner. By this mode of the invention, a leakage of the refrigerant from the air conditioner can be prevented, and by the stirring, a generation of a localized flammable region can be suppressed and speed of ventilation can be accelerated; thereby it can provide a superior safety.

Further, according to the present invention, there is provided a ventilation system, as the third mode, which is comprised of: a plurality of detecting means which detects a flammable gas; a plurality of ventilating means; and a control device which is connected to said detecting means and said ventilating means via a communication means and which controls said ventilating means; wherein, when said detecting means detects said flammable gas, said control device makes an assumption as to the location where said flammable gas exists and issues an instruction to operate to said ventilating means, and thereby, a ventilation of the room is carried out. By this mode of the invention, by identifying an operation pattern realizing a higher ventilation efficiency and instructing the ventilating means accordingly, a high efficiency ventilation can be carried out and it results in a superior safety.

Further, according to the present invention, there is provided, as the fourth mode, a ventilation system which is comprised of: a plurality of detecting means which detects a flammable gas ; a plurality of ventilating means; a plurality of fan means which stirs the air of a room when said detecting means detects said flammable gas; a control device which is connected to said detecting means, said ventilating means and said fan means via a communication means and which controls said ventilating means and said fan means; wherein, when said detecting means detects said flammable gas, said control device makes an assumption as to the location where said flammable gas exists and issues an instruction to operate to said ventilating means and said fan means, and thereby, a ventilation and stirring of the air of the room is carried out. By this mode of the invention, when the flammable gas is detected, the location of such flammable gas is assumed and a ventilation passage is identified to realize a higher ventilation efficiency and such ventilation can be carried out while stirring the air of the room by selecting the fan means located near to the source of the leakage of flammable gas. Thereby, a generation of a localized flammable region can be suppressed and speed of ventilation can be accelerated; and in addition, a high efficiency ventilation can be realized since it does not involve operations of unnecessary fan means.

Further, according to the present invention, there is provided a ventilation system, as the fifth mode, in accordance with any one of the above first, second or fourth modes, wherein, an air conditioner, an electric fan, a ceiling fan or an air purifier is used as the fan means.

Further, according to the present invention, there is provided a ventilation system, as the sixth mode, in accordance with the above second mode, wherein, said detecting means is provided inside of an indoor unit of an air conditioner which uses a flammable refrigerant. With this mode of the invention, a prompt detection of the refrigerant leakage can be realized.

Further, according to the present invention, there is provided a ventilation system, as the seventh mode, in accordance with the above second mode, wherein, said detecting means is provided below an indoor unit of an air conditioner which uses a flammable refrigerant. With this mode of the invention, in case that a refrigerant which is heavier than the air is used, a prompt detection of the refrigerant leakage can be realized.

Further, according to the present invention, there is provided, as the eighth mode, a ventilation system which is comprised of: a detecting means which detects a flammable gas; a ventilating means; and a shutoff means which stops an energy supply to particular apparatus; wherein, said detecting means, said ventilating means and said shutoff means are connected via a communication means and when said detecting means detects said flammable gas, in addition to carrying out a ventilation of the room by said ventilating means, an energy supply to said particular apparatus is stopped by said shutoff means. With this mode of the invention, since there is provided with a means by which an energy supply to a particular apparatus is stopped, it is possible to stop supplying an energy to the particular apparatus in case there is a detection of the flammable gas, in addition to conducting a ventilation. Thereby, a source of fire can be eliminated and a superior safety can be realized.

Further, according to the present invention, there is provided, as the ninth mode, a ventilation system which is comprised of: a plurality of detecting means which detects a f lammable gas; a plurality of ventilating means; a plurality of shutoff means which stops an energy supply to particular apparatus; a control device which is connected to said detecting means, said ventilating means and said shutoff means via a communication means and which controls said ventilating means, said shutoff means and operations of said shutoff means; wherein, when said detecting means detects said flammable gas, said control device makes an assumption as to the location where said flammable gas exists and issues an instruction to operate to said ventilating means, and thereby, a ventilation of the room is carried out and also issues an instruction to said shutoff means to stop an energy supply to a particular apparatus. With this mode of the invention, by assuming the location of the flammable gas when a detection of flammable gas is made, it is possible to selectively operate the ventilating means and also to operate the shutoff means selecting a particular apparatus to which an energy supply should be stopped. Thereby, a high efficiency ventilation can be realized and without a waste, a source of fire can be eliminated so that a superior safety can be achieved.

Further, according to the present invention, there is provided a ventilation system, as the tenth mode, in accordance with any one of the modes from the first mode through ninth mode, wherein, a ventilating fan or a natural ventilating duct is used as the ventilating means.

Further, according to the present invention, there is provided a ventilation system, as the eleventh mode, in accordance with any one of the modes from the first mode through tenth mode, wherein, a communication line, an electric utility line or wireless is used as the communication means.

Further, according to the present invention, there is provided a ventilation system, as the twelfth mode, in accordance with any one of the third mode, the fourth mode or the ninth mode, wherein, each of the plurality of room is provided with a detecting means, a ventilating means and fan means. Thereby, an accurate leak point can be assumed.

### Brief Description of the Drawings

Fig.1 is a block diagram showing the entire configuration of the ventilation system of one of the embodiments of the present invention;
Fig.2 is a block diagram showing the entire configuration of a ventilation system of another embodiment of the present invention.

### Detailed Description of the Preferred Embodiments

### (The First Embodiment)

One of the embodiments of the present invention will be explained with reference to the drawings below.

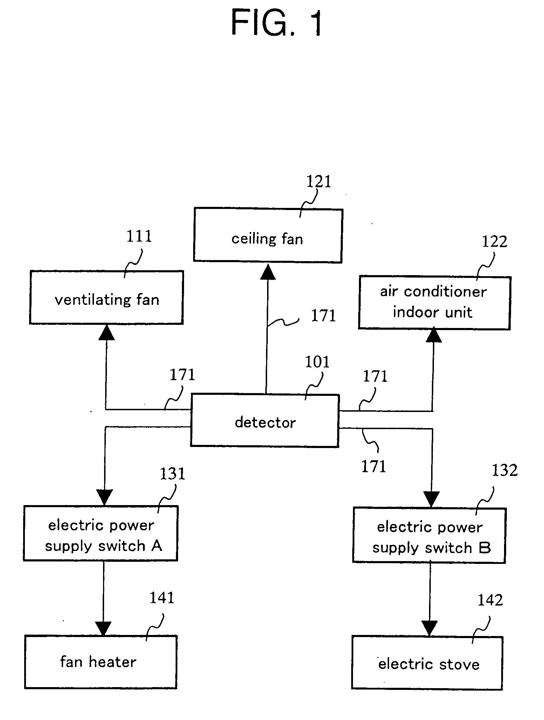

Fig.1 is a block diagram showing the entire configuration of the ventilation system of this embodiment of the invention.

As shown in this figure, the ventilation system of this embodiment is comprised of a detector 101 and a ventilating fan 111, a ceiling fan 121, an air conditioner indoor unit 122 which uses propane as a refrigerant, a fan heater 141 and an electric stove 142, all of which are respectively connected to the detector 101 by communication lines 171. Here, the fan heater is connected to the detector 101 via an electric power supply switch A 131 and the electric stove 142 is connected to the detector 101 via an electric power supply switch B 132.

The detector 101 detects a hydrocarbon such as methane gas and propane gas and can, therefore, detect a gas leakage from pipes of municipal gas or propane gas or from a burner which uses such gas, and detect a refrigerant leakage from an air conditioner indoor unit etc. which uses propane gas as a refrigerant. Here, the detector 101 is disposed inside or below the air conditioner indoor unit 122 so that it detects a leakage of refrigerant of the air conditioner indoor unit 122 well.

The air conditioner indoor unit 122 uses propane as a refrigerant, but it can also use other flammable gas such as butane or R32. The present invention is also applicable for such cases. Further, even in the case that the refrigerant is a nonflammable gas, e.g., R22, the present invention functions effectively as a means of stirring the air of a room.

Next, the operation will be explained. If the detector 101 detects a leakage of the gas or the refrigerant, a detection signal will be sent through the communication lines 171 to the ventilating fan 111, the ceiling fan 121, the air conditioner indoor unit, the electric power supply switch A 131 of the fan heater 141 and the electric power supply switch B 132 of the electric stove 142, respectively. Here, other method of communication of a detection signal than the communication lines 171 is possible, e.g., a method of using electric utility lines or a method of using wireless system such as an electromagnetic wave and infra red lights.

Upon receipt of the signal indicating leakage of the gas or refrigerant from the detector 101, the ventilating fan starts ventilation and the ceiling fan starts operating. Furthermore, the air conditioner indoor unit 122 checks whether or not there is a leakage of the refrigerant to the room. In case there is a leakage of the refrigerant, a measure for not letting the refrigerant flow into the side of indoor unit will be taken, and thereafter the ventilating operation of the indoor unit will be carried out. By taking the foregoing steps, in case that the air conditioner 122 is the source of the leak, the leakage of the refrigerant can be limited to the minimum.

Here, as a method to check whether there is a refrigerant leakage from the air conditioner indoor unit 122, it is possible to determine whether or not it is normal by measuring the temperature and pressure of the pipes. Further, as a method to prevent the refrigerant from coming into the side of indoor unit, it is possible to provide a cutoff valve at an appropriate location of the pipes; or it is also possible to provide a mechanism with which the refrigerant will be collected to the side of outdoor unit.

Since propane gas is heavier than the air, there is a high probability that it stays at the lower part of a room. In particular, in such a case that it is leaked from the air conditioner indoor unit 122, it tends to happen that a high concentration region will be created directly below the air conditioner indoor unit 122. Accordingly, the ventilation by a ventilating fan 111 will take time since such ventilating fan 111 is normally installed at the higher part of a room.

Therefore, by operating the ceiling fan 121 and the air conditioner indoor unit 122 for ventilation; and thereby, stirring the air of the room, a concentration of propane at a localized region can be prevented and ventilation speed can be accelerated. Furthermore, since the air of the room is stirred by using the ceiling fan 121 and the air conditioner indoor unit 122, it is not necessary to provide a separate fan exclusively for stirring.

Furthermore, considering the above characteristics of propane, by providing the detector 101 below the indoor unit 122, the detection of refrigerant leakage can be made more rapidly.

Furthermore, upon receipt of a detection signal, the electric power supply switch A 131 and the electric power supply switch B 132 stop supplying electric power to the fan heater 141 and the electric stove 142 to avoid the situation where the fan heater 141 and the electric stove 142 become a source of fire.

In accordance with the present embodiment, since the ceiling fan and the air conditioner indoor unit stir the air in a room, an occurrence of localized flammability can be suppressed and ventilation speed can be accelerated. Further, since the electric power supply switch A 131 and the electric power supply switch B 132 stop supplying electric power to avoid a situation where the fan heater 141 and the electric stove 142 become a source of fire, it is possible to provide a ventilation system which is of superior safety.

Incidentally, in the above first embodiment, in order to stir the air of a room, the ceiling fan 121 and the air conditioner indoor unit 122 are used. However, a similar effect can be achieved by using an electric fan or an air purifier. Further, to stop the electric supply to the fan heater 141, the electric power supply switch A 131 is used; however, in case that apparatus which uses a fuel such as a gas or oil is involved, a method by which a fuel supply is stopped may be utilized.

Further, not only for the apparatus which may be a heat source, e.g. , the fan heater 141 or the electric stove 142, but also for the apparatus which may cause a electric spark, e.g., switching of a relay switch, a shutdown of electric power supply will provide a similar effect.

### (The Second Embodiment)

Next, a ventilation system of another embodiment of the present invention will be explained referring to the drawings.

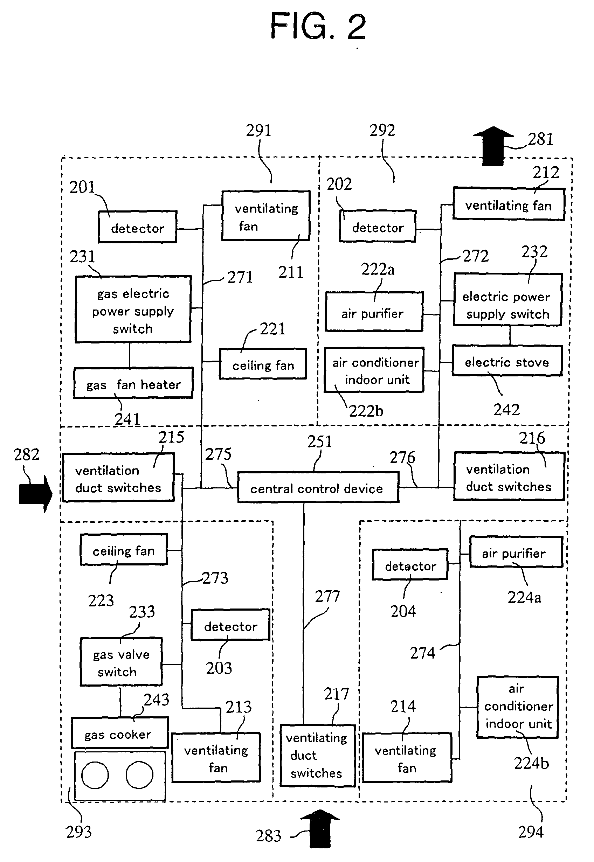

The ventilation system shown in the Fig. 2, in which an individual ventilation system is provided for each of a plurality of rooms and such systems are center-controlled, is an embodiment. In the individual rooms, i.e., 291, 292, 293 and 294, there is provided with a ventilation system which has basically similar configuration to the configuration shown in the Fig. 1.

In the room 291, a detector 201, a ventilating fan 211, a ceiling fan 221 which also function as a stirring means, a gas fan heater 241 and an electric power supply switch 231 which supplies the electric power to the gas fan heater 241 are provided and a detector 201 is connected to the ventilating fan 211, the ceiling fan 221 and the electric power supply switch 231 via communication lines 271.

In the room 292, a detector 202, a ventilating fan 212, a ceiling fan 221, an air purifier 222a, an air conditioner indoor unit 222b, an electric stove 242, and an electric power supply switch 232 which supplies the electric power to the electric stove 242 are provided and a detector 202 is connected to the ventilating fan 212, the ceiling fan 221, the air purifier 222a, the air conditioner indoor unit 222b and the electric power supply switch 232 via communication lines 272.

In the room 293, a detector 203, a ventilating fan 213, a ceiling fan 223, a gas cooker 243 and a gas valve switch 233 which supplies the gas to the gas cooker 243 are provided and a detector 203 is connected to the ventilating fan 213, the ceiling fan 223 and the gas valve switch 233 via communication lines 273.

In the room 294, a detector 204, a ventilating fan 214, an air purifier 224a and an air conditioner indoor unit 224b are provided and a detector 204 is connected to the ventilating fan 214, the air purifier 224a and the air conditioner indoor unit 224b via communication lines 274.

These detectors 201 - 204 of the respective rooms 291 - 294 are connected to a central control device 251, such as a microcomputer. In the central control device 251, a program, which instructs the ventilation functions of each apparatus in order to carry out the most effective ventilation in accordance with a source of a gas leakage or a refrigerant leakage happened in each of the rooms, is stored.

A respective ventilation duct is provided between the room 291 and the room 293, the room 292 and the room 294, and the room 293 and the room 294. Each of the ventilation ducts will be opened and closed by a ventilation duct switches 215, 216 and 217, which are connected to the central control device 251 via communication lines 275, 276 and 277.

The air conditioner indoor units 222b and 224b use propane as a refrigerant, but as same as in the first embodiment, it can also use other flammable gas such as butane or R32. Further, even in the case that the refrigerant is a nonflammable gas, e.g., R22, the present embodiment functions as a means of stirring the air of a room and operates effectively when the gas leakage is detected.

Next, the operation will be explained. When information concerning conditions of individual apparatuses or leakage detection information of gas or refrigerant is sent from the detector 201 - 204 to the central control device 251, the central control device 251 sends instruction signals to such each apparatus concerning the operations of each apparatus. The central control device 251 can identify the installation location of each apparatus using a preset information concerning the installation location of each apparatus or obtaining installation location information from each apparatus when communications are made.

Furthermore, the central control device 251 identifies the source of gas leakage or refrigerant leakage when such leakage information is sent from the detectors 201, 202, 203 and 204, and instructs ventilating functions of the ventilating fans 211 - 214, the ventilation duct switches 215, 216 and 217 in order to maximize the effectiveness of ventilation.

Furthermore, the central control device 251 sends a ventilation instruction to apparatus(es), which is installed near to the leak source of the gas or refrigerant, among the ceiling fans 221, 223, the air purifiers 222a, 224a, the air conditioner indoor units 222b, 224b in order to stir the air of the room to prevent the gas from stagnating at the lower part of the room; thereby, avoiding the development of flammable region and accelerating the ventilation speed.

Furthermore, the central control device 251 instructs the apparatus(es), which is installed near to the leak source of the gas or refrigerant, among the gas electric power supply switch 231, the electric power supply switch 232 and the gas valve switch 233 to shutoff the supply of the electric power or the gas.

In the following, a concrete explanation will be given taking an example of a case where a refrigerant of propane is leaked from the air conditioner indoor unit 222b in the room 292.

In case that the refrigerant of propane is leaked from the air conditioner indoor unit 222b, at first, the detector 202 will detect it and the detection information will be sent to the central control device 251 via the communication line 272; and thereby, an occurrence of leakage of the gas or refrigerant is confirmed. At that time, since no information of occurrence of leakage is sent from other detectors 201, 203 or 204, the central control device 251 determines that the room 251 is the source of the leak, and decides on the most suitable ventilation passage.

Here, the most suitable ventilation passage means a passage that is capable of suppressing the expansion of the area in which the concentration of gas exceeds the standard gas concentration and is capable of exhausting the leaked gas to the outdoor quickly. Practically, the most suitable ventilation passage is such passage that exhausting of the gas is carried out at the closest possible place to the leak source and the outdoor air is introduced from a plurality of places which are located in distance from the leak source and such places to introduce the air are located as surrounding the leak source.

In the present example, with respect to the room 292, which is the leak source, one of the most suitable ventilation passages is that the exhaustion air 281 is exhausted from the ventilating fan 212 and the outdoor air 282 and 283 are introduced from the ventilation ducts by controlling the ventilation duct switches 215 and 217. Accordingly, the central control device 251 will send an exhaustion instruction to the ventilating fan 212 via the communication line 272 and an opening instruction to the ventilation duct switch 215 and 217 via the communication lines 275 and 277.

Furthermore, the central control device will send a danger avoidance instruction to the air purifier 222a, the air conditioner indoor unit 222b, and the electric power supply switch 232 to request that each apparatus perform such operation that avoids the development of the flammable region of the leaked gas and that eliminates a source of fire.

Then, in accordance with the danger avoidance instruction, the air purifier will start operating at the maximum wind amount; and as same as in the first embodiment, the air conditioner indoor unit 222b will check whether or not there is a refrigerant leakage into the room, or after a measure is taken not to let the refrigerant flow into the side of indoor unit, a ventilating operation at the maximum wind amount will be carried out with the downward wind angle of 45 degrees to 70 degrees from the horizontal level. The way to check whether or not there is a leakage of the refrigerant from the air conditioner indoor unit 222b and the measure not to let the refrigerant flow into the side of indoor unit are the same as those in the first embodiment.

Because of the stirring operation of the air of a room by the air purifier 222a and the air conditioner indoor unit 222b, the creation of the localized flammable region can be avoided at the place near the leak source; and because of the exhaustion of the air by the ventilating fan 212 and of introduction of the outdoor air from the ventilation ducts by the ventilation duct switches 215 and 217, the exhaustion of the leaked gas is accelerated as a whole.

As to the additional operation of eliminating a source of fire, the electric switch 232 stops the supply of electric power to the electric stove 242.

The above explanation is concerned with a case in which the room 292 is the leak source. However, in the situations where other rooms 291, 293 or 294 becomes a leak source, the same series of operations, namely, exhaustion through the most suitable ventilation passage and prevention of development of flammable region by the stirring of the air of a room, and elimination of a source of fire, will be carried out.

As explained in detail in the above, in this embodiment, since the ceiling fan 221 and 223, which also functions as ventilating means, the air purifiers 222a and 224a and the air conditioner indoor unit 222b and 224b stir the air of a room, a localized stagnation and development of the flammable region can be suppressed and a speedy exhaustion can be realized.

Furthermore, as a cutoff means, the electric power source switch 231 which controls the electric power supply to the gas fan heater 241, the electric power source switch 232 which controls the electric power supply to the electric stove 242 and the gas valve switch 233 which controls the supply of the gas to the gas cooker 243 operate to eliminate a source of fire.

Furthermore, since the central control device 251 identifies the leak source and instructs of the exhausting through the most suitable ventilation passage and further selectively operates the apparatuses which carry out the danger avoidance operation such as stirring the air of a room and eliminating a source of fire, an efficient exhaustion and a danger avoidance operation can be carried out.

As the result, there is provided a ventilation system of superior safety.

Incidentally, in this second embodiment, the communications between the central control device 251 and other apparatuses are pursued using the communication lines 271 - 277. However, also available is a method of using electric utility lines and a method of using wireless system such as an electromagnetic wave and infra red lights and those provide the similar effects.

As explained with reference to the above specific embodiments, the present invention is effective in providing the superior safety in that, when the detector detects a flammable gas, in addition to the ventilation of the room by a ventilating means, stirring of the air of a room is carried out by using a fan means; thereby a localized stagnation of the flammable gas or concentration increase thereof can be avoided.

Further, the present invention is effective in providing the superior safety in that, when the detector detects a flammable gas, in addition to the ventilation of the room by a ventilating means, a leakage of refrigerant from the air conditioner itself is checked and if there is a leakage, then a preventive measure not to let the refrigerant flow into the pipes of the indoor unit side is taken and stirring of the air of a room is carried out; thereby, if there is a leak of the flammable refrigerant from the air conditioner, such leakage will be stopped and a localized stagnation of the flammable gas or concentration increase thereof can be avoided.

Further, the present invention is effective in providing the superior safety in that, when the detector detects a flammable gas, the control device will identify where the flammable gas is located and ventilation will be carried out by selecting a ventilation passage; thereby, ventilation will be carried out through the most suitable ventilation passage.

Further, the present invention is effective in providing the superior safety in that, when the detector detects a flammable gas, in addition to the ventilation of the room by a ventilating means, an energy supply to a particular apparatus is stopped by means of a shutoff means; thereby, it is possible to eliminate a source of fire.

## Claims

1. A ventilation system comprising:
a detecting means which detects a flammable gas;
a ventilating means; and
a shutoff means which stops an energy supply to particular apparatus;
wherein said detecting means, said ventilating means and said shutoff means are connected via a communication means and when said detecting means detects said flammable gas, in addition to carrying out a ventilation of the room by said ventilating means, an energy supply to said particular apparatus is stopped by said shutoff means.

2. A ventilation system according to claim 1, further comprising:
a plurality of detecting means which detects a flammable gas;
a plurality of ventilating means;
a plurality of shutoff means which stops an energy supply to particular apparatus;
a control device which is connected to said detecting means, said ventilating means and said shutoff means via a communication means and which controls said ventilating means, said shutoff means and operations of said shutoff means;
wherein, when said detecting means detects said flammable gas, said control device makes an assumption as to the location where said flammable gas exists and issues an instruction to operate to said ventilating means, and thereby, a ventilation of the room is carried out and also issues an instruction to said shutoff means to stop an energy supply to a particular apparatus.

3. A ventilation system according to claim 1 or 2,
wherein said ventilating means is a ventilating fan or a natural ventilating duct.

4. A ventilation system in accordance with any one of claims 1 through 3,
wherein said communication means is a communication line, an electric utility line or wireless.

5. A ventilation system according to claim 2,
wherein said plurality of detecting means, said plurality of ventilating means and said plurality of fan means are provided to a plurality of rooms, respectively.
